# EUROPÄISCHE PATENTANMELDUNG

(11) **EP 1 238 697 A1**
(43) Veröffentlichungstag der Anmeldung: **11.09.2002**
(21) Anmeldenummer: 02004976.3
(22) Anmeldetag: 05.03.2002
(51) Int. Cl.: B01D 53/84

(54) **Biofilter zum Reinigen von Abluft**

(30) Priorität: 05.03.2001 DE 10110519
(71) Anmelder: Hartmann, Anton, 33165 Lichtenau (DE)
(72) Erfinder: Hartmann, Anton, 33165 Lichtenau (DE)
(74) Vertreter: Hanewinkel, Lorenz, Dipl.-Phys.

(57) **Zusammenfassung**

Die Erfindung bezieht sich auf einen Biofilter (4) zum Reinigen von Abluft mit einem Mittel (6) zur Feuchthaltung des Biofilters mit einer ersten, tragenden Schicht aus Holzschwarten (8) und mit einer sich stromab anschließenden zweiten Schicht aus feinerem Holzmaterial (10), das aus einer nicht sauer reagierenden Holzart besteht.

## Beschreibung

Die Erfindung betrifft einen Biofilter, insbes. zur Reinigung von Luft aus Tierställen.

Herkömmliche Biofilter bestehen aus verschiedenen Biomaterialien, zum Beispiel Holzstükken, Holzschwarten, Häckselmaterial sowie Stroh und Heu, in verschiedener Zusammensetzung und unterschiedlichem Aufbau.

Die WO 01/19498 A1 offenbart einen Filter zur Reinigung von Abluft, der aus einer Strohschicht und einer zweiten ligninhaltigen Schicht gebildet wird. Als Stand der Technik werden dort weitere Biofilter zitiert, die verschiedene Anteile an Stroh und Torf enthalten, sowie auch in einem Fall einen Anteil Rottenmist.

Weiterhin ist in der DE 38 07 033 A1 ein Biofilter geoffenbart. der mit Weißfäulpilzen bewachsen ist, zur Reinigung von Abgasen mit organischen Verbindungen. Der Biofilter hat eine Trägerschicht aus organischen Materialien, nämlich Torf, Kompost sowie Baumrinde. Als Hölzer eignen sich alle Laub- und Nadelhölzer, die jedoch durch die aufgebrachten Pilze, z.B. *Polyporus* oder *Pleorotus* zersetzt werden. Insbesondere Birken- oder Pappelholz eignet sich für dieses Filter im Unterschied zu Hartholz wie Buche oder Eiche nicht, da diese verhältnismäßig schnell von den darauf siedelnden Pilzen zersetzt werden.

Die DE 36 41 178 C2 offenbart einen Biofilter zur Reinigung von Abgasen mit organischen Verunreinigungen, der eine Trägerschicht aus einer Mischung mit Torf, Calciumcarbonat, vegetarischen Abfällen, Kompost oder auch Baumrinde aufweist. Diese Trägerschicht ist mit Mikroorganismen besiedelt.

Die DE 298 11 063 U1 offenbart die Verwendung einer Kompost- und/oder Humusmischung in einer Schicht aus zerkleinertem Holz als Biofilter. Dieser Biofilter soll auf die Oberfläche einer Deponie aufgebracht werden, um Sickerwasser aufzunehmen und aus der Deponie austretende Gase zu absorbieren.

Ein Nachteil der herkömmlichen Filter ist die rasche Verwesung des Biomaterials, wodurch die Wirksamkeit des Filters nachläßt und der Filter neu aufgebaut werden muß.

Der Erfindung liegt daher die Aufgabe zugrunde, einen Biofilter bereitzustellen, der möglichst langsam verwest und somit möglichst lange wirksam bleibt.

Diese Aufgabe wird erfindungsgemäß gelöst durch den Gegenstand des Anspruchs 1.

Vorteilhafte Weiterbildungen der Erfindung sind in den Unteransprüchen aufgezeigt.

Im Unterschied zu den bekannten Biofiltern offenbart die vorliegende Erfindung einen Aufbau, der zwei Holzschichten umfaßt, wobei die eine Schicht aus groberen Holzschwarten besteht und als Trägerschicht dient, und die stromabwärts gelegene zweite Schicht feineres Holzhäcksel umfaßt, das aus einem nicht sauer reagierenden Holz besteht. Ein wesentlicher Unterschied des erfindungsgemäßen Biofilters zu den bekannten besteht darin, daß erfindungsgemäß keine sauren Substanzen, wie beispielsweise Torf oder Humus vorliegen. Durch die Bereitstellung mindestens der feineren Holzhäckselschicht aus einer Holzart, die nicht sauer reagiert, bietet der erfindungsgemäße Biofilter eine Unterlage für eine besondere Mikroorganismenpopulation, die zur Reinigung der Abluft in der Lage ist.

Eine mikrobiologische Untersuchung zeigte eine Besiedlung des Filtermaterials durch Mikroorganismen, die einen neutralen bis alkalischen Standort bevorzugen, d.h. unter sauren Bedingungen nicht oder nur schlecht leben können. Bei dieser mikrobiologischen Untersuchung wurden die Bakterien in Kultur gezogen, die aus einem Holzstückchen des Biofilters herausgespült werden konnten. Zur Zeit der Probennahme war der Biofilter bereits im Laufzeitbetrieb und reinigte die Abluft aus einem Schweinestall. Die hier in Kultur nachgewiesenen Bakterien, insbesondere *Clostridium perfringens* wachsen bevorzugt im neutralen bis alkalischen Milieu. Weiterhin zeigt die mikrobiologische Untersuchung die besondere Wirkung des erfindungsgemäßen Biofilters darin, daß als gramnegative Stäbchen sogenannte Nonfermenter gefunden wurden. Denn unter diesen Nonfermentern der gramnegativen Stäbchen finden sich keine Darmbakterien, so daß die Wirksamkeit der biologischen Filterleistung nachgewiesen wird.

Im Unterschied zum bekannten Stand der Technik, der im allgemeinen versucht, natürliche Abbauprozesse von Mikroorganismen zu nutzen, die entweder bei der Zersetzung von Holz durch höhere Pilze oder bei Verrottungsprozessen wie in Kompost oder Rottenmist ablaufen, offenbart die vorliegende Erfindung einen Aufbau für einen Biofilter, der zum einen über einen Zeitraum von mehreren Jahren mechanisch stabil ist, zum anderen Abluft reinigt, ohne parallele Verwesungs- oder Zersetzungsprozesse des Filtermaterials selbst zu erfordern.

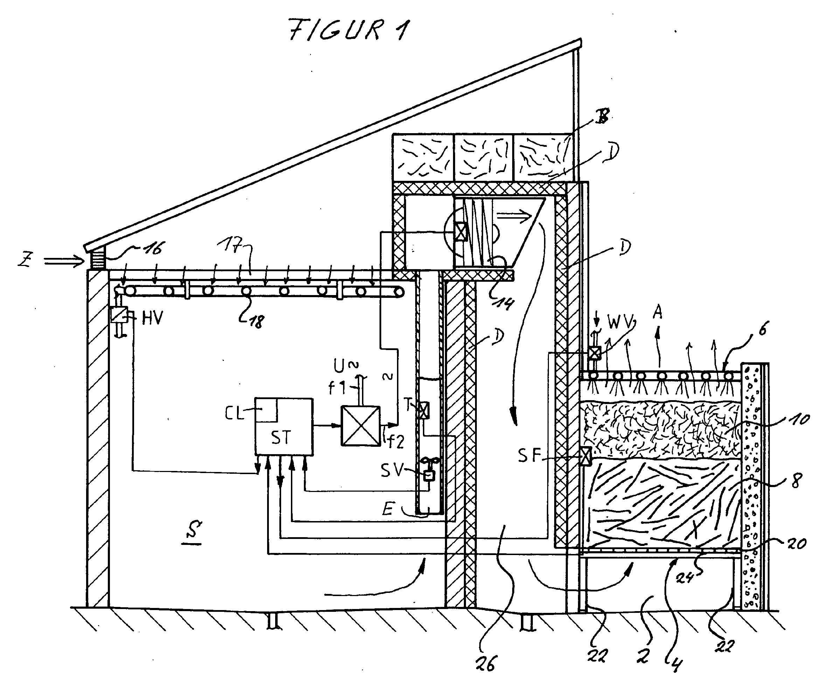

Die mechanische Stabilität des erfindungsgemäßen Biofilters ist inzwischen für einen Filter gemäß Figur 1 gezeigt worden, der auch nach mehr als 6 Jahren kontinuierlichen Betriebs noch begehbar ist, d.h. die Holzschichten sind nicht zersetzt worden. Da üblicherweise Holz durch die Besiedlung von Bakterien und insbesondere Pilzen, beispielsweise Weißfäulepilze, zersetzt wird und die mechanische Stabilität darunter leidet, ist eine derartige Langzeitstabilität des erfindungsgemäßen Biofilters sehr überraschend.

Diese Langzeitstabilität geht nur auf den Aufbau aus zwei Holzschichten zurück, von denen mindestens die feinere Häckselschicht aus einem Holz bestehen muß, das nicht sauer reagiert. Ebenso wie die mechanische Stabilität, d.h. eine vernachlässigbar geringe Zersetzung des Holzes, wird auch die besondere Filtrationsleistung hinsichtlich der Entfernung von Bakterien und Stallgerüchen aus der Stallabluft durch die besondere Mikroorganismenpopulation hergestellt, die sich auf dem erfindungsgemäßen Holzaufbau ansiedelt.

Das Biofilter bildet eine funktionale Einheit mit dem temperiert durchlüfteten Stall, der Druckkammer und dem Kanalsystem, in dem die Filterzuluft weiterhin temperiert geführt ist und von Staubpartikeln erheblich befreit wird. Die Luftgeschwindigkeit ist gemäß der geltenden DIN-Norm etwa 8 m³/h · Tier, d.h. im unten gezeigten Beispiel für 1000 Tiere 8000 m³/h, was bei 100 m² Filterfläche 80 m/h Durchtrittsgeschwindigkeit ausmacht. Die Mikroben sind somit hochgradig mit Luftsauerstoff versorgt.

Die anhand der Figuren beschriebenen Filterschichten, die aus Schnittmengen bestehen, lassen sich auch als einzeln oder insgesamt zu Platten gebundene Traghölzer und/oder Häcksel oder Holzwollestreifen ausbilden. Als Bindemittel für das feinere Schichtmaterial eignet sich ein Latexbinder, der durch Wärme gehärtet wird. Auf diese Weise lassen sich die Filter mit vorgefertigten Platten einfach dimensionieren und herstellen. Die Platten können durch eine Nut-Federverbindung dicht an dicht verlegt werden und in Schichten auf Fuge verlegt werden. Sie stellen ein handelsfähiges Zwischenprodukt dar, das in standartisierter Qualität und gestuften Abmessungen anzubieten ist.

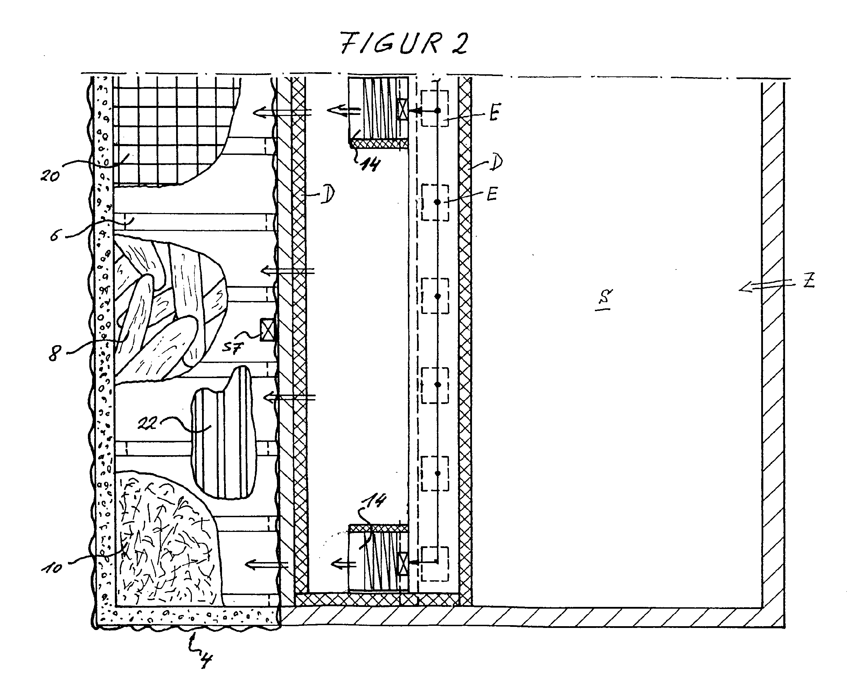

Die Erfindung wird nachfolgend anhand eines Ausführungsbeispiels unter Bezugnahme auf Fig. 1 und 2 erläutert. Es zeigen:
Figur 1 einen Querschnitt durch einen Biofilter und einen Stall und
Figur 2 eine Draufsicht auf den Biofilter und den Stall.

Grundsätzlich sind verschiedene Ausführungen des erfindungsgemäßen Biofilters denkbar. Im folgenden wird eine bevorzugte Ausführungsform beschrieben.

In der vorliegenden Ausführungsform ist der Biofilter mit einem Tierstall verbunden. Zwischen dem Stall und dem Biofilter befinden sich Ventilatoren 14. Diese saugen Luft aus der Umgebung durch eine Stallöffnung 16 an Heizrohren 18 vorbei in den Stall und von dort durch die Ventilatoren 14 in ein geschlossenes Kanalsystem 26 zu dem Biofilter. Vor dem Biofilter baut sich in einer Absetzkammer 2, hier eine Druckkammer, ein Druck auf, da der Biofilter einen Strömungswiderstand bildet. In der angesaugten Luft befindet sich Staub von dem Futter der Tiere und dem im Stall befindlichen Stroh und/oder Heu. Dieser Staub setzt sich z.T. am Boden des Kanalsystems und der Absetzkammer 2 ab, was dadurch unterstützt wird, daß die Strömung um 90° bzw. 180°umgelenkt wird und die Querschnittsfläche der Absetzkammer 2 deutlich größer ist als die des Kanalsystems, so daß eine deutliche Verlangsamung der Strömung eintritt (Beruhigungskammereffekt). Mittels einer Wasserspülung kann der Staub vom Boden abgetragen und in einen Güllebehälter geleitet werden.

Im Bereich des Stalls befindet sich eine Steuervorrichtung ST, die ein Heizungsventil HV, ein Sprühwasserventil WV und eine Steuerfrequenz f₂ für die Ventilatoren 14 regelt. Das Heizungsventil HV regelt die Warmwasserzufuhr für die Heizrohre 18, so daß bedarfsweise die Luft aus der Umgebung für den Stall vorgewärmt wird. Das Sprühwasserventil WV wird zu vorbestimmten Zeiten bzw. Zeitabständen über eine Zeitschaltuhr CL in der Steuervorrichtung ST und/oder in Abhängigkeit von der Feuchtigkeit des Biofilters, die mit Hilfe eines Feuchtigkeitssensors SF im Biofilter gemessen wird, geregelt. Die Steuerfrequenz f₂ zur Steuerung der Leistung des Lüftermotors wird von der Steuervorrichtung ST geregelt in Abhängigkeit von der Temperatur der aus dem Stall abgesaugten Luft, die von einem Temperatursensor T gemessen wird, und deren Geschwindigkeit, gemessen mit Hilfe eines Luftgeschwindigkeitssensors SV.

Der Biofilter lagert auf Baustahlmatten 24 und Estrichmatten 20 auf einer Tragekonstruktion 22, vorliegend einem Rohrgestell, oberhalb der Druckkammer. Mit Baustahlmatten werden im vorliegenden Fall Matten aus ca. 5 mm dicken Eisendrähten bezeichnet, die rechteckige Felder von ca. 15-25 cm Breite und ca. 20-30 cm Länge bilden. Mit Estrichmatten werden im vorliegenden Fall Matten aus ca. 2-3 mm dicken Eisendrähten bezeichnet, die quadratische Felder von ca. 4 x 4 cm bilden. Auf den Estrichmatten befindet sich eine erste Schicht aus unregelmäßig angeordneten Holzschwarten 8, insbesondere Buchenholz. Die Holzschwarten haben eine Dicke von ca. 1-5 cm und eine Breite von ca. 10-20 cm und bilden, da sie im Biofilter ungeordnet vorliegen, relativ große Hohlräume. Die Länge der Holzschwarten ist variabel und kann zwischen 20 cm und 70 cm variieren, abhängig von der Größe des Biofilters. Darüber befindet sich eine zweite Schicht aus Häckselmaterial, insbesondere aus Weide oder Pappel. Das Häckselmaterial besteht in der vorliegenden Ausführungsform aus einem weicheren Holz als das, aus dem die Holzschwarten sind, und beide Holzarten reagieren nicht sauer. Im Übergang zwischen diesen beiden Schichten ist der Feuchtigkeitssensor SF angebracht. Der Biofilter kann durch eine Befeuchtungsanlage 6, hier eine Berieselungsanlage, von oben befeuchtet werden und ist ansonsten nach oben offen.

In der vorliegenden Ausführungsform befinden sich im Stall ca. 260 Sauen und 1000 Ferkel. Die Ventilatoren sind derart ausgelegt, daß eine der Anzahl der Tiere entsprechende Luftmenge gemäß den VDI-Richtlinien abgesaugt werden kann. Der Biofilter weist eine Fläche von 100 m² auf. Die Druckkammer hat eine Höhe von 50 cm, die Schicht Holzschwarten eine Höhe von 80 cm und die Schicht Häckselmaterial eine Höhe von 20 bis 50 cm. In der Druckkammer wird durch die Ventilatoren ein Druck von ca. 150 Pa aufgebaut.

Die Bioflora des Biofilters umfaßt Mikroorganismen, z. B. Hefen, Protozooen, Algen und/oder Bakterien, insbesondere aus einer sogenannten Impfung, d.h. einer Zuführung von bestimmten Mikroorganismen an bzw. in den Biofilter. Bei einer Impfung wird zum Beispiel von oben eine Flüssigkeit mit bestimmten darin enthaltenen Mikroorganismen auf den Biofilter geschüttet, die sich dann in diesem ansiedeln. Der Biofilter kann bevorzugt mit Milchsäurebakterien, in der vorliegenden Ausführung bspw. durch eine als "Brottrunk" bezeichnete Mischung der Fa. Kanne, und/oder mit Hefebakterien geimpft werden. Eine derartige Impfung kann anschließend an den Aufbau des Filters erfolgen, d.h. unmittelbar vor Inbetriebnahme, und ggf. von Zeit zu Zeit wiederholt werden, bspw. nach einem bestimmten Volumendurchsatz oder einer bestimmten Zeit.

Die Luft aus dem Tierstall ist insbesondere mit Methan, Ammoniak und Kohlendioxid angereichert. Ferner befinden sich in der Stallluft Krankheitserreger, z.B. Bakterien, die frei in der Luft vorkommen oder an den Staub aus dem Stall geheftet sind., z.B. Streptokokken aus dem Fell der Tiere oder Fäkalbakterien. Passiert die Stallluft den Biofilter, so wird diese zum einen mechanisch und zum anderen biologisch gereinigt. Die mechanische Reinigung ist zweistufig. Zunächst setzen sich die "schweren" Staubteilchen am Boden des Kanalsystems oder der Absetzkammer ab. Der Boden der Absetzkammer ist als schiefe Ebene ausgebildet. An der erhöhten Seite der Ebene befindet sich eine Öffnung zum Wassereinlaß und auf der tiefer gelegenen Seite befindet sich ein Auslaß. Das eingelassene Wasser trägt die Staubteilchen von der schiefen Ebene ab und führt diese durch den Auslaß einem Güllebehälter zu. Die "leichten" Staubteilen gelangen in den Biofilter und werden dort durch die Holzschwarten und/oder das Häckselmaterial zurückgehalten. Bei der biologischen Reinigung wird die Luft aus dem Stall durch die im Biofilter vorhandene Bioflora, d.h. durch Mikroorganismen (z.B. Hefen, Protozooen, Algen und/oder Bakterien) gereinigt. Zum einen gibt es in der Bioflora bestimmte Mikroorganismen, die sich von Methan, Ammoniak und Kohlendioxid ernähren, d.h. diese Stoffe aufnehmen und in andere Substanzen umwandeln. Zum anderen werden Mikroorganismen aus der Stallluft, z.B. krankheitserregende Bakterien, durch die Bioflora des Biofilters getötet. Die aus dem Stall kommende Luft gelangt somit gereinigt in die Umgebung.

Bei herkömmlichen Verfahren wurde die Luft aus dem Stall ungefiltert an die Umgebung abgegeben. Auf diese Weise konnten sich Krankheiten von den Tieren eines Stalls auf die Tiere eines anderen Stalls, z.B. eines weiter entfernt liegenden aber auch eines eigenen benachbarten, übertragen werden. Zum Beispiel konnte der AK-Virus (Auyeszkysche-Virus) in der Luft in bis zu 60 km Entfernung von einem infizierten Stall nachgewiesen werden. Dies gilt für andere Krankheiten, wie z.B. Husten und Schnupfen, analog. Die durch den vorliegenden Biofilter gereinigte Luft ist weitestgehend von Krankheitserregern befreit und eine Übertragung von Krankheiten durch die Luft weitestgehend minimiert. Auf diese Weise konnte in der vorleigenden Stallausbildung unter Verwendung des vorliegenden Filters der Einsatz von Medikamenten, insbesondere Antibiotika, erheblich eingeschränkt werden.

Die Filteranlage 4 für den Stall S beispielhafter Größe beansprucht ein relativ kleines Volumen im Verhältnis zum Stall S und ist mit üblichen bautechnischen Mitteln einfach herzustellen.

Die Mikrobenpopulation im Filter 4 zerlegt auch die geruchsintensiven organischen Gase und Dämpfe von den Tieren und deren Exkrementen. Die Abluft A, die den Filter verläßt, ist geruchlich derart gering belastet, daß in wenigen Metern Entfernung von der Filteroberfläche keine merkliche Geruchsbelästigung auftritt und die Stallanlage im Wohngebiet betrieben werden darf. Die im Beispiel vorgesehenen drei Hochleistungs-Turbinenlüfter 14 erbringen ein sehr geringes Geräuschniveau, da sie zuluft- und abluftseitig sowie ingesamt schalldämmend eingekleidet sind. Auch die schalldämmenden Platten D aus Biomaterial, insbesondere Stroh, sind mit bioaktiven Mikroben besiedelt, die die Filterfunktion unterstützen. Die Dämmplatten D sind im Umgebungsbereich der Ventilatoren 14 mit Strohballen B zur ergänzenden Schalldämmung versehen.

Das Raumklima im Stall S ist in der Höhe weitgehend temperaturkonstant und zugfrei im Aufenthaltsbereich der Tiere. Dazu ist die Zuluft großflächig durch eine perforierte Decke 17 zugeführt, unter der sich die thermostatisch geregelte Deckenheizung 18 befindet. Die Abluftschächte sind über die ganze Stalllänge verteilt angeordnet und deren Ablufteinlässe E befinden sich in etwa 1 m Höhe etwas oberhalb des Aufenthaltsbereiches der Tiere. Diese Anordnung der Ablufteinlässe E unterhalb der Kopfhöhe vom Stallpersonal verhindert weitgehend das Einatmen von Staub und Abluft der Tiere. Ein erheblicher Rückgang von Allergien, Entzündungen und Infektionen der Atemwege wurde beim Personal im Dauerversuch beobachtet. Auch die Tiere zeigten einen erheblichen Rückgang von Infektionen im Vergleich zu konventioneller Belüftung und ohne die Filteranlage 4.

Die Zuluft Z zur Decke 17 wird auf der Gebäudeseite aufgenommen, die zum Biofilter-Abluftaustritt A diametral liegt.

### Bezugszeichenliste

- 2: Absetzkammer
- 4: Biofilter
- 5: Befeuchtungsanlage
- 6: Holzwarten
- 7: Häckselmaterial
- 8: Ventilator
- 9: Stallöffnung
- 10: Heizrohre
- 11: Estrichmatten
- 12: Tragekonstruktion des Biofilters
- 13: Baustahlmatten
- 14: Ventilator
- 16: Stallöffnung
- 17: perforierte Decke
- 18: Heizrohre
- 20: Estrichmatten
- 22: Tragkonstruktion des Biofilters
- 24: Baustahlmatten
- 26: Kanal
- A: Ablust
- B: Strohballen
- D: Dämmplatte/n
- E: Ablufteinlässe
- S: Stall
- Z: Zuluft
- CL: Uhr
- f₁: Netzfrequenz
- f₂: Steuerfrequenz des Lüftermotors
- HV: Heizungsventil
- SF: Feuchtigkeitssensor
- ST: Steuervorrichtung
- SV: Lufgeschwindigkeitssensor
- T: Temperatursensor
- U∼: Netzspannung
- WF: Sprühwasserventil

## Patentansprüche

1. Biofilter (4) zum Reinigen von Abluft mit einem Mittel (6) zur Feuchthaltung des Biofilters mit einer ersten, tragenden Schicht aus Holzschwarten (8) und mit einer sich stromab anschließenden zweiten Schicht aus feinerem Holzmaterial (10), das aus einer nicht sauer reagierenden Holzart besteht.

2. Biofilter (4) nach Anspruch 1, **dadurch gekennzeichnet, daß** das feinere Holzmaterial) Häckselmaterial ist.

3. Biofilter (4) nach Anspruch 1 oder 2, **dadurch gekennzeichnet, daß** das Mittel (6) zur Feuchthaltung eine Berieselungsanlage ist.

4. Biofilter nach einem der vorangehenden Ansprüche, **dadurch gekennzeichnet, daß** das Mittel zur Feuchthaltung (6) durch einen Feuchtigkeitssensor (SF) an oder in dem Biofilter (4) und/oder eine Zeitschaltuhr (CL) aktivierbar ist.

5. Biofilter nach einem der voranstehenden Ansprüche, **dadurch gekennzeichnet, daß** der Biofilter mit Mikroorganismen, insbesondere mit Milchsäurebakterien oder Hefe beimpft ist.

6. Biofilter nach Anspruch 5, **dadurch gekennzeichnet, daß** der Biofilter bei Inbetriebnahme oder in regelmäßigen oder unregelmäßigen Abständen oder auch jeweils nach einem bestimmten Volumendurchsatz mit Mikroorganismen, insbesondere Milchsäurebakterien oder Hefen beimpft ist und mit Clostridium perfringens sowie gramnegativen Stäbchen besiedelt ist.

7. Biofilter nach einem der voranstehenden Ansprüche, **gekennzeichnet durch** eine stromaufliegende Absetzkammer (2), insbesondere eine Druckkammer.

8. Biofilter nach Anspruch 7, **dadurch gekennzeichnet, daß** die Absetzkammer (2) eine Bodenspülung umfaßt.

9. Biofilter nach Anspruch 7 oder 8, **dadurch gekennzeichnet, daß** der Absetzkammer (2) ein Kanal (26) zur Zuführung der Abluft vorgeschaltet ist, der einen kleineren Querschnitt als die Absetzkammer (2) aufweist.

10. Biofilter nach einem der Ansprüche 7 bis 9, **dadurch gekennzeichnet, daß** die erste und zweite Schicht (8, 10) des Biofilters horizontal angeordnet sind, wobei die Abluft der Absetzkammer (2) in horizontaler Strömungsrichtung so zugeführt wird, daß sie um etwa 90° umgelenkt wird, bevor sie von unten in den Biofilter (4) gelangt.

11. Biofilter nach einem der vorangehenden Ansprüche, **gekennzeichnet durch** mindestens eine frequenzgeregelte Ventilatorturbine (14) zum Zuführen der Stallabluft.

12. Biofilter nach einem der vorangehenden Ansprüche, **dadurch gekennzeichnet, daß** die zweite Schicht (10) aus einer Holzart, insbesondere aus Weide oder Pappel, besteht, die weicher ist als die, aus der die erste Schicht besteht.

13. Biofilter nach einem der vorangehenden Ansprüche, **dadurch gekennzeichnet, daß** die erste Schicht (3) aus einer Holzart besteht, die nicht sauer reagiert.

14. Biofilter nach einem der Ansprüche 4 bis 13, **dadurch gekennzeichnet, daß** der Feuchtigkeitssensor (SF) im Übergang zwischen der ersten und der zweiten Schicht (8, 10) angeordnet ist.

15. Biofilter nach Anspruch 11, **dadurch gekennzeichnet, daß** die Ventilatorturbine (14) derart frequenzgeregelt betrieben wird, daß in dem dem Filter vorgelagerten Stall (S) jeweils eine tierbesatzabhängige Mindestluftgeschwindigkeit und eine Maximaltemperatur eingehalten ist.

16. Biofilter nach Anspruch 15, **dadurch gekennzeichnet, daß** die Ventilatorturbine (14) sowie deren Ansaugbereich und Austrittsbereich und die Druckkammer (2) durch Biomaterialmatten (D) und ggf. Strohballen (B) schall- und wärmegedämmt verkleidet bzw. ausgekleidet sind.

17. Biofilter nach Anspruch 15 oder 16, **dadurch gekennzeichnet, daß** der Stall (S) eine vollflächige Deckenzuluftführung mit einer raumthermostatisch geregelten Deckenheizung (18) aufweist.

18. Biofilter nach einem der Ansprüche 15 und 17, **dadurch gekennzeichnet, daß** an mindestens einer Stallwandung des Stalles (S) verteilt Ausgangsschächte des Ansaugbereiches der Turbinenventilatoren (14) angeordnet sind, deren Ablufteinlässe (E) sich in ca. 1 m Höhe befinden.

19. Biofilterplatte aus einer nicht sauer reagierenden Holzart, dessen Holz häcksel-oder streifenförmig durch einen wärmegebundenen Latexbinder grobporig angeordnet plattenförmig zuzammengehalten ist.

20. Biofilterplatte nach Anspruch 19, **dadurch gekennzeichnet, daß** gegenüberliegende Seiten der Platte mit Nut/Feder versehen sind.

21. Biofilterplatte nach Anspruch 19 oder 20, **dadurch gekennzeichnet, daß** sie eine luftdurchlässige tragende Unterschicht aus nicht sauer reagierendem Holz aufweist.
